# NEUE EUROPÄISCHE PATENTSCHRIFT

(11) **EP 0 569 400 B2**
(45) Veröffentlichungstag und Bekanntmachung des Hinweises auf die Entscheidung über den Einspruch: **23.04.1997**
(45) Hinweis auf die Patenterteilung: 01.06.1994
(21) Anmeldenummer: 92903082.3
(22) Anmeldetag: 29.01.1992
(51) Int. Cl.: B01J 35/04, F01N 3/20, H05B 3/16

(54) **WABENKÖRPER MIT INHOMOGENER ELEKTRISCHER BEHEIZUNG**
HONEYCOMB BODY WITH NON-UNIFORM ELECTRIC HEATING
CORPS EN NID D'ABEILLES A CHAUFFAGE ELECTRIQUE NON HOMOGENE

(30) Priorität: 31.01.1991 DE 4102890
(43) Veröffentlichungstag der Anmeldung: 18.11.1993
(73) Patentinhaber: Emitec Gesellschaft für Emissionstechnologie mbH, 53797 Lohmar (DE)
(72) Erfinder: BRÜCK, Rolf, D-5060 Bergisch Gladbach 1 (DE); SWARS, Helmut, D-5060 Bergisch Gladbach 1 (DE)
(74) Vertreter: Kahlhöfer, Hermann, Dipl.-Phys.
(86) Internationale Anmeldenummer: EP9200190
(87) Internationale Veröffentlichungsnummer: WO9213635

(56) Entgegenhaltungen:
- EP-A- 0 401 646
- WO-A-89/10471
- FR-A- 2 138 230

## Beschreibung

Die Erfindung betrifft einen Wabenkörper aus gewickelten, gestapelten oder anderweitig geschichteten Lagen aus zumindest einem Blech, bei dem die Lagen eine Vielzahl von für ein Fluid durchströmbaren, untereinander im wesentlichen parallelen Kanälen bilden und untereinander derart elektrisch verbunden sind, daß zumindest ein Pfad zur Leitung eines elektrischen Stromes durch den Wabenkörper zu dessen Beheizung vorliegt.

Wabenkörper finden vielfältige Verwendung als Trägerkörper für Katalysatoren, die zur katalysierten Umsetzung reagibler Bestandteile von Fluiden bestimmt sind. Ein besonderes Anwendungsgebiet für Wabenkörper mit Katalysatoren ist die katalytische Reinigung von Abgasen aus Brennkraftmaschinen, insbesondere aus Brennkraftmaschinen in Kraftfahrzeugen. Hierzu werden katalytisch beschichtete Wabenkörper in den Abgassystemen der Brennkraftmaschinen installiert und von den beim Betrieb der Brennkraftmaschinen anfallenden Abgasen durchströmt.

Die Wabenkörper werden hergestellt aus keramischen Massen oder aus Metallblechen. Zur Bildung eines metallischen Wabenkörpers werden Lagen aus zumindest teilweise gewellten, gefalteten oder ähnlich strukturierten Blechen geschichtet, gestapelt, spiralig aufgewickelt oder auf andere Weise verschlungen. Möglichkeiten hierzu sind in den Patentschriften EP 0 223 058 B1, EP 0 245 737 B1, EP 0 245 738 B1, US-PS 4,753,918 und US-PS 4,822,766, den Veröffentlichungen WO 89/10470 A1, WO 89/10471 A1 und WO 90/03220 A1 sowie in der deutschen Gebrauchsmusterschrift DE 89 08 738 U1 beschrieben.

Katalysatoren zur Umsetzung reagibler Bestandteile eines sie umströmenden Fluides entfalten ihre katalytische Wirkung erst oberhalb bestimmter, für den jeweiligen Katalysator und die zu katalysierende Reaktion spezifischer Grenztemperaturen, den sog. "Anspringtemperaturen". Für Katalysatoren zur Umsetzung von Schadstoffen in Abgasen von Brennkraftmaschinen liegen die Anspringtemperaturen typischerweise bei einigen 100° C. Damit ein Katalysator aktiv wird, muß er mithin auf eine Temperatur oberhalb der Anspringtemperatur aufgeheizt werden. Im Abgassystem eines Kraftfahrzeuges erfolgt dies in der Regel durch das den Katalysator umströmende Abgas, so daß allerdings die katalytische Wirkung erst mit einer gewissen Verzögerung ab Inbetriebnahme der Brennkraftmaschine einsetzt. Um diese Verzögerung zu reduzieren, ist bereits eine elektrische Vorheizung des Katalysators bzw. des diesen tragenden Wabenkörpers bekannt; entsprechende Hinweise sind den Schriften WO 89/10470 A1, WO 89/10471 A1 und DE 89 08 738 U1 entnehmbar. Die den Wabenkörper bildenden Blechlagen sind elektrisch derart untereinander verbunden, daß zumindest ein Pfad zur Leitung eines elektrischen Stromes durch den Wabenkörper vorliegt; außerdem hat der Wabenkörper Stromzuführungen, an die über entsprechende Schalteinrichtungen eine elektrische Stromquelle, beispielsweise eine Kraftfahrzeugbatterie, anzuschließen ist. Ein Wabenkörper üblicher Größe und Bauart zur Verwendung im Abgassystem eines Kraftfahrzeuges erfordert zur Aufheizung in hinreichend kurzer Zeit eine Heizleistung von mehreren 100 W bis über 4 kW; entsprechend muß ein elektrisches Bordnetz, wie es in Personen-Kraftfahrzeugen gebräuchlich ist, bei einer Spannung von etwa 12 V Ströme bis über 400 A zur Beheizung des Wabenkörpers liefern. Problematisch ist hierbei die Tatsache, daß ein üblicher Wabenkörper einen elektrischen Widerstand von bestenfalls einigen tausendstel Ohm hat; aus einer 12V-Spannungsquelle zöge ein solcher Wabenkörper Ströme bis über 1000A, wodurch ein übliches Kraftfahrzeug-Bordnetz, insbesondere die Batterie, in kaum zuträglichem Maße belastet würde. Es sind bereits Maßnahmen bekannt, den elektrischen Widerstand eines Wabenkörpers zu erhöhen. Nach der WO 89/10470 A1 und der WO 89/10471 A1 werden elektrisch beheizbare Wabenkörper durch Spalte und/oder elektrisch isolierende Zwischenschichten zwischen den Lagen so unterteilt, daß sich mindestens ein elektrischer Strompfad durch den Wabenkörper mit einem elektrischen Widerstand von einer Höhe ergibt, die mit einer Spannung im Bereich der üblichen Spannung eines Kraftfahrzeug-Bordnetzes einen Strom in zuträglicher Höhe durch den Wabenkörper und eine Wärmeentwicklung mit angemessener Leistung in dem Wabenkörper ergibt. Es ist auch angeregt worden, statt eines einzigen Wabenkörpers mit Katalysatorbeschichtung zwei Wabenkörper zu verwenden, wobei ein elektrisch beheizbarer kleinerer Wabenkörper einem nicht elektrisch zu beheizenden größeren Wabenkörper vorgeschaltet ist, wobei beide Wabenkörper im wesentlichen gleiche Durchmesser aufweisen, der kleinere Wabenkörper allerdings wesentlich kürzer als der größere Wabenkörper ist. Allein aufgrund der Dimensionierung kann an dem kleineren Wabenkörper ein größerer elektrischer Widerstand als an dem größeren Wabenkörper realisiert werden; der kleinere Wabenkörper kann somit bei begrenzter Belastung der Spannungsquelle relativ schnell auf eine Temperatur oberhalb seiner Anspringtemperatur gebracht werden, worauf die katalysierte Reaktion in dem nacheinander den kleineren und den größeren Wabenkörper durchströmenden Abgas einsetzt und, da diese Reaktion exotherm ist, zurweiteren, beschleunigten Aufheizung des größeren Wabenkörpers, der schließlich Hauptlast der katalytischen Umsetzung übernimmt, beiträgt. Gemäß der DE 89 08 738 U1 können diezur Herstellung des Wabenkörpers versehenen Blechlagen mit Löchern versehen werden. Durch das Einfügen von Löchern kann der spezifische Widerstand des Bleches gesteigert werden, so daß ein Wabenkörper mit relativ hohem elektrischem Widerstand realisierbar ist. Diese Maßnahme wird jedoch, wie im übrigen auch alle Maßnahmen, die auf eine Reduzierung der Dicke des zum Aufbau eines Wabenkörpers verwendeten Bleches abstellen, mit zunehmender Vergrößerung des Wabenkörpers wirkungslos. Eine Vergrößerung eines Wabenkörpers bekannter Art unter Beibehaltung der Verhältnisse der Abmessungen zueinander ist stets verbunden mit einer Reduktion seines elektrischen Widerstandes, so daß die Hinweise des Standes der Technik mit Einschränkungen der Abmessungen des Wabenkörpers zu verbinden sind. Dies aber bedeutet, daß nach dem Stand der Technik in Systemen oberhalb gewisser Abmessungen auf zweiteilige Wabenkörper und die damit verbundenen Aufwendungen zurückgegriffen werden muß.

Dementsprechend soll mit der vorliegenden Erfindung ein Wabenkörper angegeben werden, bei dem der elektrische Widerstand des Pfades zur Leitung des heizenden elektrischen Stromes unabhängig von den konkreten Abmessungen des Wabenkörpers stets auf einen Wert eingestellt ist, der eine Beheizung mittels einer vorgegebenen elektrischen Spannung in angemessener Zeit, unter begrenzter Belastung der Quelle der elektrischen Spannung, gestattet.

Erfindungsgemäß wird ein Wabenkörper angegeben, der insbesondere als Trägerkörper für einen Abgaskatalysator geeignet ist, von zwei einander gegenüberliegenden Stirnflächen und zumindest einer dazwischen angeordneten Mantelfläche umgrenzt ist und aus gewickelten, gestapelten oder anderweitig geschichteten Lagen aus zumindest einem Blech besteht, bei dem
a) die Lagen eine Vielzahl von für ein Fluid durchströmbaren Kanälen bilden, deren jeder Öffnungen in den Stirnflächen hat;
b) zumindest ein elektrisch leitfähiger Pfad gebildet ist der durch den Wabenkörper führt;
c) der Pfad einen elektrischen Widerstand mit einer inhomogenen Verteilung entlang des Pfades innerhalb des Wabenkörpers hat.

Die Erfindung geht von der Erkenntnis aus, daß die räumliche Verteilung der Wärmeerzeugung durch elektrische Beheizung in einem Wabenkörper gezielt beeinflußt werden kann, indem in dem Wabenkörper mehrere Bereiche abgegrenzt werden, die voneinander abweichende elektrische Widerstände haben; die räumliche Verteilung dieser Bereiche kann die räumliche Verteilung des den Wabenkörper durchsetzenden elektrischen Stromes bestimmen, und die Verteilung der Wärmeerzeugung über den Pfad des elektrischen Stromes kann durch lokale Erhöhung des elektrischen Widerstandes gesteuert werden. So können durch gezielte Erhöhung des elektrischen Widerstandes entsprechender Bereiche der Blechlagen Zonen gebildet werden, die durch den elektrischen Strom in erhöhtem Maß beheizt werden. Weiterhin kann die Form des Pfades in dem Wabenkörper durch entsprechende Ausbildung der Blechlagen gezielt beeinflußt und gestaltet werden, so daß sich eine inhomogene Beheizung ergibt, die der konkreten Gestaltung und Verwendungsart besonders angepaßt ist.

Eine inhomogene Verteilung des elektrischen Widerstandes über den Pfad zur Leitung des elektrischen Stromes durch den erfindungsgemäßen Wabenkörper ergibt sich besonders leicht dadurch, daß der Pfad durch Ausnehmungen, insbesondere Löcher, Schlitze oder Vertiefungen, In den Lagen umgrenzt ist und zumindest eine Sperrzone vorliegt, aus der der elektrische Strom weitestgehend ferngehalten wird. Die Ausnehmungen können beispielsweise lange Schlitze sein, die den Pfad begrenzen. Der Pfad ist somit ein Gebilde aus zumindest einem streifenartigen Blechteil, das weiterhin zur Erzielung der inhomogenen Verteilung des Widerstandes eine über seine Länge variierende Breite haben kann. Anstelle langer, im wesentlichen parallel zum Pfad ausgerichteter Schlitze kann auch eine hinreichende Zahl von Ausnehmungen vorgesehen werden, deren jede im wesentlichen quer zur Verlaufsrichtung des Pfades angeordnet ist. Eine Anordnung derartiger Ausnehmungen setzt ebenfalls einem elektrischen Strom einen hohen, wenngleich endlichen, Widerstand entgegen und vermag wesentlich zur Konzentration des elektrischen Stromes in einem vorgegebenen Bereich beizutragen.

Die Erfindung gestattet es, die Lage des Pfades in dem Wabenkörper frei festzulegen. Dementsprechend besteht eine vorteilhafte Weiterbildung des erfindungsgemäßen Wabenkörpers darin, den Pfad in der Nähe einer bestimmten der beiden Stirnflächen anzuordnen. Ein mit einem Katalysator beschichteter Wabenkörper wird üblicherweise derart betrieben, daß seine Kanäle von einem Fluid, in der Regel einem Abgas, mit reagiblen Bestandteilen durchströmt werden. Diese Durchströmung erfolgt naturgemäß von Stirnseite zu Stirnseite; daher kann für die Anordnung des Pfades diejenige Stirnseite bestimmt werden, an der das Fluid in den Wabenkörper eintritt. Da in vielen Anwendungen die katalysierte Reaktion exotherm ist kann sie zur Lieferung von Wärme zur Aufheizung des Wabenkörpers herangezogen werden; um diese Möglichkeit optimal auszunutzen, ist zur Einleitung der katalysierten Reaktion eine elektrische Vorheizung des Wabenkörpers im Bereich derjenigen Stirnfläche zu bevorzugen, an der das Fluid in den Wabenkörper eintritt. Die durch die elektrische Beheizung ausgelöste katalysierte Reaktion führt dem Fluid Wärme zu, mit der die nachfolgend durchströmten Bereiche des Wabenkörpers aufgeheizt werden können. Außerdem hat die verstärkte Beheizung der erwähnten Stirnseite den Vorteil, daß die Abkühlung des Wabenkörpers durch ein einströmendes Fluid, dessen Temperatur wesentlich unter der Anspringtemperatur des Katalysators liegt, abgemildert und womöglich unterbunden werden kann.

Eine vorteilhafte Weiterbildung des erfindungsgemäßen Wabenkörpers jedweder Gestaltung ist dadurch gekennzeichnet daß der Pfad zumindest eine Heizzone und zumindest eine Leitzone aufweist, wobei die Leitzone und die Heizzone elektrisch in Reihe liegen und die Leitzone einen deutlich geringeren elektrischen Widerstand als die Heizzone hat, so daß die Wärmeentwicklung in der Leitzone wesentlich geringer als die Wärmeentwicklung in der Heizzone ist. So sind in dem Pfad Bereiche zur Verteilung des elektrischen Stromes - die Leitzone - abgegrenzt von Bereichen, die hauptsächlich beheizt werden sollen - die Heizzone -. Die Inhomogenisierung der Beheizung des Wabenkörpers kann somit intensiviert und zur Erzielung einer optimierten Beheizung ausgestaltet werden.

Günstig ist es im Hinblick auf die Vermeidung von Wärmeverlusten durch Leitung und/oder Strahlung, die Heizzone mit gewissem Abstand von der Mantelfläche anzuordnen, so daß zwar eine ausreichende Beheizung der Randbereiche des Wabenkörpers durch Wärmeleitung und/oder Wärmestrahlung gewährleistet ist, die Abgabe von Wärme aus dem Wabenkörper heraus jedoch auf ein hinreichend geringes Maß beschränkt bleibt. Wie bereits erwähnt, ist allerdings die Anordnung der Heizzone in der Nähe einer bestimmten der beiden Stirnflächen durchaus vorteilhaft, da auf diese Weise die bei der katalysierten Reaktion entstehende Wärme zur weiteren Beheizung des Wabenkörpers ausgenutzt werden kann.

Die Bildung der Heizzone erfolgt günstigerweise dadurch, daß die in der Heizzone anzuordnenden Lagen mit Ausnehmungen, insbesondere mit Vertiefungen oder Löchern, versehen werden. Die Bildung von Löchern erfolgt günstigerweise durch Stanzen; zur Bildung von Vertiefungen können Präge- und Ätzverfahren eingesetzt werden, auch ist ein mehrschichtiger Aufbau der Lagen aus zumindest einem gelochten und einem ungelochten Blech denkbar.

In günstiger Weiterbildung der Erfindung im Rahmen jedweder Ausgestaltung wird die Form der Ausnehmungen, die den elektrischen Widerstand der verschiedenen Zonen des Wabenkörpers beeinflussen, der Verteilung des elektrischen Stromes in dem Wabenkörper angepaßt. Jeder Ausnehmung kommt eine Stromrichtung zu, und zwar diejenige Richtung, in der der elektrische Strom die Ausnehmung umströmt; günstig ist es, wenn die Ausnehmung ein senkrecht zur zugehörigen Stromrichtung gestrecktes Langloch ist. Der Weg, den der elektrische Strom zu nehmen hat, wird auf diese Weise besonders groß; es ergibt sich ein besonders großer mittlerer spezifischer elektrischer Widerstand der betreffenden Zone des Wabenkörpers, was insbesondere für einen Wabenkörper zur Verwendung in einem Kraftfahrzeug wünschenswert ist.

Im Rahmen jedweder Ausbildung der Erfindung können die Ausnehmungen sowohl in Löchern als auch in Vertiefungen (Bereichen mit reduzierter Blechdicke) bestehen. Je nach Anwendung können insbesondere teils Löcher und teils Vertiefungen, oder auch allein Löcher, vorgesehen werden.

Im Unterschied zu Isolierschichten aus Keramik oder dergleichen (deren Einsatz die vorliegende Erfindung keineswegs ausschließt) stellen Bleche mit Ausnehmungen keine Problempunkte hinsichtlich der mechanischen Festigkeit dar, zumindest solange, wie die Zahl und Anordnung der Ausnehmungen auf ein angemessenes Maß beschränkt wird. Die Zonen in dem Wabenkörper, in denen die Bleche mit Ausnehmungen versehen sind, sind grundsätzlich durch formschlüssige Verbindungen der Blechlagen untereinander ebenso stabilisierbar wie die Zonen, in denen die Blechlagen von Ausnehmungen frei sind; es gibt keine Fremdkörper", die mitdem Blech nicht ohne weiteres verbunden werden können und somit womöglich die Festigkeit des Wabenkörpers beeinträchtigen.

Eine Weiterbildung der Erfindung ist dadurch gekennzeichnet, daß die Lagen durch abwechselnde Schichtung mindestens eines im wesentlichen glatten ersten Bleches und mindestens eines gewellten oder zickzack-geknickten zweiten Bleches gebildet sind, wobei nur das erste, glatte Blech Ausnehmungen aufweist. Die dem elektrischen Strom zur Verfügung stehenden Wege durch ein gewelltes oder ähnlich strukturiertes Blech sind stets wesentlich länger als die Wege durch ein glattes Blech; daher sind die Vorteile der Erfindung bereits dann erzielbar, wenn nur das glatte Blech mit Ausnehmungen versehen ist. Dies kommt einer rationellen Fertigung besonders entgegen, da mehrfache Bearbeitungen der den Wabenkörper bildenden Bleche nicht notwendig sind. Es sei darauf hingewiesen, daß in dem Wabenkörperzusätzlich zur erfindungsgemäßen Strukturierung der Bleche Isolierschichten vorgesehen werden können; solche Isolierschichten können z. B. zur Isolierung strukturierter glatter gegen nicht strukturierte gewellte Bleche dienen. Isolierschichten können z. B. durch Flammspritzen oder dergleichen aufgebrachte Keramikschichten sein.

Die vorstehend beschriebene Ausführungsform der Erfindung kann vorteilhaft weitergebildet werden, indem das erste Blech und das zweite Blech im Hinblick auf Material und/oder Dicke dahingehend ausgewählt werden, daß der spezifische elektrische Widerstand des zweiten, gewellten oder ähnlich strukturierten Bleches wesentlich größer bemessen ist als derjenige des ersten, glatten Bleches. Derart wird die Verdrängung des elektrischen Stromes aus dem zweiten Blech weiter unterstützt und die Möglichkeit des Vorsehens von Sperrzonen (Erläuterung siehe oben) weitestgehend gewahrt.

Die weitere Erläuterung der Erfindung erfolgt anhand der in der Zeichnung dargestellten Ausführungsbeispiele. Im einzelnen zeigen:
Figur 1 ein mit Ausnehmungen versehenes glattes Blech zur Verwendung in einem erfindungsgemäßen Wabenkörper in einfacher Ausbildung;
Figur 2 und Figur 3 weitere Ausführungsbeispiele für Bleche zum Aufbau erfindungsgemäßer Wabenkörper;
Figur 4 und Figur 5 Wabenkörper gemäß der Erfindung.

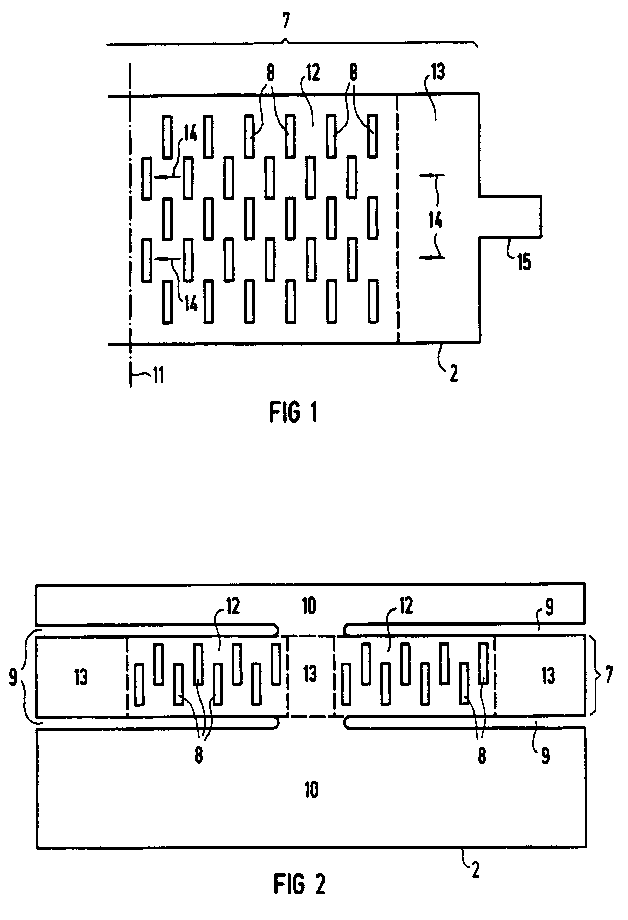

Figur 1 zeigt ein glattes Blech 2, das mit weiteren glatten und eventuell gewellten oder ähnlich strukturierten Blechen derselben Art zum Aufbau eines erfindungsgemäßen Wabenkörpers verwendet werden kann. Dargestellt ist nur eine Hälfte des glatten Bleches 2; das Blech 2 ist als symmetrisch bezüglich der Mittellinie 11 zu denken. Das Blech 2 wird, eingebaut in einen erfindungsgemäßen Wabenkörper, zum Zwecke der Beheizung von einem elektrischen Strom durchströmt, dessen Stromrichtung 14 durch Pfeile angedeutet ist. Der elektrische Strom wird an einer ersten Stromzuführung 15 und an einer zweiten, nicht dargestellten Stromzuführung dem Blech 2 zugeführt bzw. von dem Blech 2 abgeführt. In dem Blech 2 sind eine Heizzone 12 und eine Leitzone 13 dargestellt, wobei die Heizzone 12 einen deutlich höheren elektrischen Widerstand als die Leitzone 13 hat. Die Leitzone 13 dient vornehmlich der Verteilung des elektrischen Stromes, der an der Stromzuführung 15 einoder ausgespeist wird; die Wärmeerzeugung findet in erster Linie in der Heizzone 12 statt. Der elektrische Widerstand des Bleches 2 in der Heizzone 12 ist erhöht durch Ausnehmungen 8. Diese Ausnehmungen 8 zwingen den elektrischen Strom zu einem mäandrierenden Fluß um die Ausnehmungen 8 herum. Damit ist einerseits der Weg des elektrischen Stromes durch die Heizzone 12 verlängert und andererseits der für den Stromfluß zur Verfügung stehende Querschnitt des Bleches 2 verringert. Der Pfad 7 entspricht im Beispiel nach Figur 1 dem gesamten Blech 2, da dieses insgesamt, abgesehen von lokal begrenzten Effekten an den Ausnehmungen 8 und der Stromzuleitung 15, homogen durchströmt wird. Die Form der Ausnehmungen 8 ist so gewählt, daß der Widerstand der Heizzone 12 möglichst groß ist. Im besonderen sind die Ausnehmungen 8 ausgeführt als senkrecht zur Stromrichtung 14 gestreckte Löcher 8. Eine Erhöhung des elektrischen Widerstandes der Heizzone 12 ließe sich auch dann erreichen, wenn die Ausnehmungen 8 keine Löcher, sondern lediglich Vertiefungen wären. Die vorstehend beschriebenen Effekte würden in einem solchen Falle zwar nur in reduziertem Maß auftreten, was aber je nach Anwendung schon ausreichend sein kann.

Figur 2 zeigt ein weiteres Beispiel für ein glattes Blech 2 zum Aufbau eines erfindungsgemäßen Wabenkörpers. Bei diesem Blech 2 entspricht die Breite des Pfades 7 zur Leitung des elektrischen Stromes nicht der vollen Breite des Bleches 2, sondern durch vier lange Schlitze 9 ist ein streifenförmiger Ausschnitt des Bleches 2 als Pfad 7 abgeteilt. An den Schmalseiten des Bleches 2 weist der Pfad 7 zunächst jeweils eine Leitzone 13 auf, in die beispielsweise der elektrische Strom eingespeist bzw. aus denen er ausgespeist wird; auch in der Mitte des Bleches 2 liegt eine Leitzone 13. Weiterhin weist der Pfad 7 zwischen jeweils zwei Leitzonen 13 eine Heizzone 12 auf, wobei der elektrische Widerstand jeder Heizzone 12 wie im vorstehenden Beispiel durch Löcher 8 erhöht ist. Wie in Figur 1 sind gestreckte Löcher 8 dargestellt; selbstverständlich können auch Ausnehmungen in anderer Form, je nach Anforderung, angebracht werden. In die an die Breitseiten des Bleches 2 anschließenden Sperrzonen 10 dringt der den Pfad 7 durchfließende elektrische Strom praktisch nicht ein. Hinzuweisen ist auf eine alternative Verwendungsmöglichkeit des Bleches 2 aus Figur 2: es kann an beiden Leitzonen 13 an den Schmalseiten des Bleches 2 jeweils eine erste Anschlußmöglichkeit und an einer der Breitseiten des Bleches 2 eine zweite Anschlußmöglichkeit für den elektrischen Strom angebracht werden. Damit läßt sich ein Y-förmiger Pfad 7 im Rahmen der Erfindung realisieren; auch kann der Strom durch die im Rahmen der erstgenannten Verwendung des Bleches 2 gemäß Figur 2 als Sperrzonen 10 vorgesehenen Bereiche wieder zu den Schmalseiten zurückgeführt und dort ausgespeist werden.

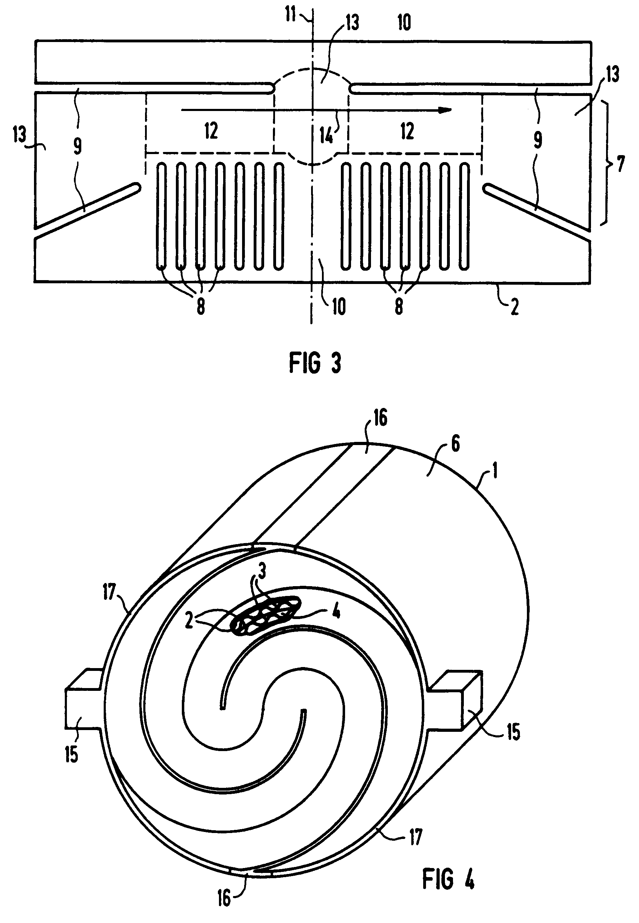

Figur 3 zeigt eine Variante des glatten Bleches nach Figur 2; die im unteren Bereich des Bleches 2 dargestellten Schlitze 9 zur Abgrenzung des Pfades 7 sind gegenüber dem Ausführungsbeispiel nach Figur 2 verkürzt, und an ihre Stelle treten langgestreckte Ausnehmungen 8, die eine Sperrzone 10 mit einem elektrischen Widerstand definieren, dessen Höhe eine nennenswerte Durchflutung mit elektrischem Strom ausschließt. Die Heizzonen 12 sind gegeben durch Verengungen des Pfades 7; der relativ hohe elektrische Widerstand jeder Heizzone 12 wird lediglich durch Verengung des Querschnittes des Pfades 7 erzielt. Im Bereich der Mittellinie 11 befinden sich keine Ausnehmungen, und auch die Schlitze 9 wahren einen gewissen Abstand zur Mittellinie 11. So steht dort dem den Pfad 7 durchfließenden Strom ein erhöhter Querschnitt zur Verfügung, womit eine zentrale Leizzone 13 gegeben ist.

Figur 4 demonstriert wie ein Wabenkörper 1 gemäß der Erfindung zusammengesetzt werden kann. Ein Stapel aus glatten Blechen 2 und strukturierten Blechen 3 ist S-förmig verschlungen, wobei die einzelnen Windungen des Stapels durch keramische Isolierelemente 16, die bis in die Mantelfläche 6 des Wabenkörpers 1 ragen, voneinander getrennt sind. Die Mantelfläche 6 ist gebildet von zwei etwa halbkreisförmigen Mantelblechen 17, die voneinander durch die Isolierelemente 16 getrennt sind. Jedes Mantelblech 17 weist eine Stromzuführung 15 auf. Der Pfad für den Strom zur Beheizung des Wabenkörpers 1 ist ebenso gewunden wie der Stapel. Ein den Wabenkörper 1 durchfließender elektrischer Strom folgt in erster Linie der Verlaufsrichtung der durch die Bleche 2 und 3 gebildeten Lagen. Übergänge von Lage zu Lage sind zwar möglich, jedoch zumeist mit Unwegen verbunden. Bevorzugt verbleibt der elektrische Strom in den durch die glatten Bleche 2 gegebenen Lagen, da die Wege durch diese Lagen die kürzesten sind. Diese Konzentration des elektrischen Stromes auf die glatten Bleche 2 ist u. U. erhöht, wenn die gewellten Bleche 3 durch entsprechend verringerte Dicke und/oder Verwendung eines anderen Werkstoffes einen gegenüber den glatten Blechen 2 erhöhten spezifischen elektrischen Widerstand haben. In der Regel ergeben sich die mit vorliegender Erfindung erzielbaren Vorteile bereits dann, wenn lediglich die glatten Bleche 2 mit Ausnehmungen und dergleichen versehen sind.

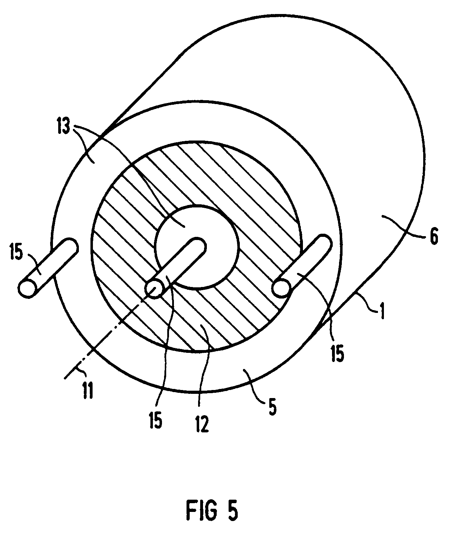

Figur 5 zeigt eine weitere Variante eines Wabenkörpers 1 gemäß der Erfindung. Der Wabenkörper 1 weist Stromzuführungen 15 an einer Stirnfläche 5 auf; zwei dieser Stromzuführungen 15 befinden sich in der Nähe der Mantelfläche 6, eine Stromzuführung 15 ist an der Mittellinie 11 angeordnet. Zum Zwecke der Durchleitung von elektrischem Strom durch den Wabenkörper werden die Stromzuführungen 15 in der Nähe der Mantelfläche 6 parallelgeschaltet; der elektrische Stromfließt in radialer Richtung zwischen den Stromzuführungen 15 in der Nähe der Mantelfläche 6 und der Stromzuführung 15 in der Nähe der Mittellinie 11. Der an die Mantelfläche 6 unmittelbar anschließende Bereich des Wabenkörpers ist als Leitzone 13 mit geringem elektrischen Widerstand ausgeführt; auf diese Weise kann der elektrische Strom weitgehend gleichmäßig verteilt von den Außenbereichen des Wabenkörpers 1 zur Mittellinie 11 hin vordringen. Zwischen den beiden Leitzonen 13 ist eine hohlzylindrische Heizzone 12 ausgewiesen; in ihr findet die Erzeugung von Wärme durch den elektrischen Strom in erster Linie statt. Die Form der Heizzone 12 kann im Hinblick auf gleichmäßige Beheizung des Wabenkörpers 1 bei gleichzeitiger Vermeidung von Wärmeverlusten durch die Mantelfläche 6 optimiert werden.

Mit vorliegender Erfindung wird ein elektrisch beheizbarer Wabenkörper angegeben, dessen elektrische Parameter unabhängig von den konkreten mechanischen Abmessungen auf die zur Lieferung des elektrischen Stroms zur Verfügung stehende Spannungsquelle abgestimmt sind, wobei die räumliche Verteilung der Beheizung in dem Wabenkörper den konkreten mechanischen und betrieblichen Erfordernissen anpaßbar ist. Die erfindungsgemäßen Wabenkörper eignen sich besonders zur Verwendung als beheizbare Träger für Katalysatoren zur Umsetzung von Schadstoffen in den Abgasen von Brennkraftmaschinen wie z. B. Ottomotoren, da mit derartigen Wabenkörpern zu jeder Inbetriebnahme der Brennkraftmaschinen die praktisch sofortige Aktivierung der Katalysatoren möglich ist.

## Patentansprüche

1. Wabenkörper (1), der insbesondere als Trägerkörper für einen Abgaskatalysator geeignet ist, von zwei einander gegenüberliegenden Stirnflächen (5) und zumindest einer dazwischen angeordneten Mantelfläche (6) umgrenzt ist und aus gewickelten, gestapelten oder anderweitig geschichteten Lagen aus zumindest einem Blech (2; 3) besteht, bei dem
a) die Lagen eine Vielzahl von für ein Fluid durchströmbaren Kanälen (4) bilden, deren jeder Öffnungen in den Stirnflächen (5) hat;
b) zumindest ein elektrisch leitfähiger Pfad (7) gebildet ist, der durch den Wabenkörper (1) führt;
c) der Pfad (7) einen elektrischen Widerstand mit einer inhomogenen Verteilung entlang des Pfades (7) innerhalb des Wabenkörpers (1) hat.

2. Wabenkörper (1) nach Anspruch 1, in dem der Pfad (7) durch Ausnehmungen (8; 9), insbesondere Löcher (8) und/oder Vertiefungen und/oder Schlitze (9), in den Lagen umgrenzt ist und zumindest eine Sperrzone (10) vorliegt, in die der elektrische Strom nicht in wesentlichem Maß eindringt.

3. Wabenkörper (1) nach Anspruch 2, in dem der Pfad (7) hauptsächlich in der Nähe einer bestimmten der beiden Stirnflächen (5) liegt.

4. Wabenkörper (1) nach einem der vorhergehenden Ansprüche, bei dem
a) der Pfad (7) zumindest eine Heizzone (12) und zumindest eine Leitzone (13) aufweist;
b) die Leitzone (13) und die Heizzone (12) elektrisch in Reine geschaltet sind;
c) die Leitzone (13) und die Heizzone (12) jeweils einen elektrischen Widerstand haben, und der elektrische Widerstand der Heizzone (12) größer ist als der elektrische Widerstand der Leitzone (13).

5. Wabenkörper (1) nach Anspruch 4, in dem die Heizzone (12) von der Mantelfläche (6) beabstandet ist.

6. Wabenkörper (1) nach Anspruch 4 oder 5, bei dem die Heizzone (12) in der Nähe einer der beiden Stirnflächen (5) liegt.

7. Wabenkörper (1) nach einem der Ansprüche 4 bis 6, in dem die Lagen in der Heizzone (12) Ausnehmungen (8; 9), insbesondere Löcher (8) und/oder Vertiefungen und/oder Schlitze (9), haben.

8. Wabenkörper (1) nach Anspruch 7, bei dem
a) jeder Ausnehmung (8; 9) eine Stromrichtung (14) zukommt, in der die Ausnehmung (8; 9) von dem elektrischen Strom umströmt wird;
b) jede Ausnehmung (8; 9) senkrecht zu ihrer Stromrichtung (14) gestreckt ist.

9. Wabenkörper (1) nach einem der Ansprüche 2, 3, 7 oder 8, bei dem die Ausnehmungen (8; 9) zumindest zum Teil Löcher (8) und/oder Schlitze (9) und im übrigen Vertiefungen sind.

10. Wabenkörper (1) nach einem der Ansprüche 2, 3, 7 oder 8, bei dem die Ausnehmungen (8; 9) Löcher (8) und/oder Schlitze (9) sind.

11. Wabenkörper (1) nach einem der vorhergehenden Ansprüche, bei dem
a) die Lagen gebildet sind durch abwechselnde Schichtung mindestens eines im wesentlichen glatten ersten Bleches (2) und mindestens eines gewellten oder zickzack-geknickten zweiten Bleches (3);
b) nur das erste Blech (2) Ausnehmungen (8; 9) aufweist.

12. Wabenkörper (1) nach Anspruch 11, bei dem das erste Blech (2) und das zweite Blech (3) jeweils einen spezifischen elektrischen Widerstand haben und derjenige des zweiten Bleches (3) wesentlich größer ist als derjenige des ersten Bleches (2).

13. Verwendung eines Wabenkörpers (1) nach einem der vorhergehenden Ansprüche als Trägerkörper für einen Katalysator bei der Herstellung eines Abgassystems für ein Kraftfahrzeug.

## Claims

1. A honeycomb body (1) which is particularly suitable as a carrier body for an exhaust gas catalyst is enclosed by two mutually oppositely disposed end faces (5) and at least one intermediately arranged lateral surface (6) and consisting of wound, stacked or otherwise layered layers consisting of at least one sheet metal plate (2; 3), wherein
a) the layers form a plurality of passages (4) through which a fluid is able to flow, each of which passages has openings in the end faces (5);
b) at least one electrically conductive path (7) is formed leading through the honeycomb body (1);
c) the path (7) has an electrical resistance with a non-homogeneous distribution along the path (7) inside of the honeycomb body (1).

2. A honeycomb body (1) according to Claim 1, in which the path (7) is delimited in the layers by recesses (8; 9), in particular holes (8) and/or depressions and/or slots (9), and at least one blocking zone (10) is present, into which the electric current does not penetrate to any considerable extent.

3. A honeycomb body (1) according to Claim 2, in which the path (7) is disposed mainly in the vicinity of a specific one of the two end faces (5).

4. A honeycomb body (1) according to one of the preceding Claims, wherein
a) the path (7) has at least one heating zone (12) and at least one conducting zone (13);
b) the conducting zone (13) and the heating zone (12) are electrically switched in series;
c) the conducting zone (13) and the heating zone (12) each have an electric resistance, and the electric resistance of the heating zone (12) is greater than the electric resistance of the conducting zone (13).

5. A honeycomb body (1) according to Claim 4, in which the heating zone (12) is distanced from the lateral surface (6).

6. A honeycomb body (1) according to Claim 4 or Claim 5, wherein the heating zone (12) is disposed in the vicinity of one of the two end faces (5).

7. A honeycomb body (1) according to one of Claims 4 to 6, in which the layers in the heating zone (12) have recesses (8; 9), in particular holes (8) and/or depressions and/or slots (9).

8. A honeycomb body (1) according to Claim 7, wherein
a) each recess (8; 9) is attributed one direction of flow (14) in which electrical current flows around the recess (8; 9);
b) each recess (8; 9) extends vertically to its direction of flow (14).

9. A honeycomb body (1) according to one of Claims 2, 3, 7 or 8, wherein the recesses (8; 9) are at least partly holes (8) and/or slots (9) and otherwise depressions.

10. A honeycomb body (1) according to one of Claims 2, 3, 7 or 8, wherein the recesses (8; 9) are holes (8) and/or slots (9).

11. A honeycomb body (1) according to one of the preceding claims, wherein
a) the layers are formed by alternating layering of at least one substantially smooth first sheet metal plate (2) and at least one corrugated or second sheet metal plate (3) which is bent into a zigzag configuration;
b) only the first sheet metal plate (2) has clearances (8; 9).

12. A honeycomb body (1) according to Claim 11, wherein the first sheet metal plate (2) and the second sheet metal plate (3) each has a specific electrical resistance and that of the second sheet metal plate (3) is considerably greater than that of the first sheet metal plate (2).

13. Use of a honeycomb body (1) according to one of the preceding Claims as a carrier body for a catalyst with the manufacture of an exhaust gas system for a motor vehicle.

## Revendications

1. Corps en nid d'abeilles (1), qui convient notamment comme corps support pour un catalyseur de gaz d'échappement, est délimité par deux faces frontales opposées (5) et au moins une face d'enveloppe (6) disposée entre ces dernières, et est constitué de couches enroulées, empilées ou autrement stratifiées, formées à partir d'au moins une tôle (2 ; 3), dans lequel
a) les couches constituent une multiplicité de canaux (4) pouvant être traversés par un fluide et possédant chacun des ouvertures dans les faces frontales (5),
b) il est formé au moins une piste électroconductrice (7), qui traverse le corps en nid d'abeilles (1),
c) la piste (7) possède une résistance électrique de répartition non homogène le long de la piste (7) au dedans du corps en nid d'abeilles (1).

2. Corps en nid d'abeilles (1) selon la revendication 1, dans lequel la piste (7) est délimitée par des évidements (8 ; 9), notamment des trous (8) et/ou des renfoncements et/ou des fentes (9) dans les couches, et au moins une zone d'isolement (10) est présente, dans laquelle le courant électrique ne pénètre pas dans une mesure importante.

3. Corps en nid d'abeilles (1) selon la revendication 2, dans lequel la piste (7) se trouve principalement à proximité d'une face frontale déterminée parmi les deux faces frontales (5).

4. Corps en nid d'abeilles (1) selon l'une quelconque des revendications précédentes, dans lequel
a) la piste (7) présente au moins une zone de chauffage (12) et au moins une zone de conduction (13),
b) la zone de conduction (13) et la zone de chauffage (12) sont électriquement reliées en série,
c) la zone de conduction (13) et la zone de chauffage (12) possèdent chacune une résistance électrique, et la résistance de la zone de chauffage (12) est supérieure a celle de la zone de conduction (13).

5. Corps en nid d'abeilles (1) selon la revendication 4, dans lequel la zone de chauffage (12) est distante de la face d'enveloppe (6).

6. Corps en nid d'abeilles (1) selon la revendication 4 ou 5, dans lequel la zone de chauffage (12) se trouve à proximité d'une des deux faces frontales (5).

7. Corps en nid d'abeilles (1) selon l'une quelconque des revendications 4 à 6, dans lequel les couches possèdent des évidements (8 ; 9) dans la zone de chauffage (12), notamment des trous (8) et/ou des renfoncements et/ou des fentes (9).

8. Corps en nid d'abeilles (1) selon la revendication 7, dans lequel
a) à chaque évidement (8 ; 9) est associée une direction de courant (14), dans laquelle le courant électrique passe autour de l'évidement (8; 9),
b) chaque évidement (8; 9) s'étend perpendiculairement à sa direction de courant (14).

9. Corps en nid d'abeilles (1) selon l'une quelconque des revendications 2, 3, 7 ou 8, dans lequel les évidements (8; 9) sont au moins pour partis des trous (8) et/ou des fentes (9), et au reste des renfoncements.

10. Corps en nid d'abeilles (1) selon l'une quelconque des revendications 2, 3, 7 ou 8, dans lequel les évidements (8 ; 9) sont des trous (8) et/ou des fentes (9).

11. Corps en nid d'abeilles (1) selon l'une quelconque des revendications précédentes, dans lequel
a) les couches sont formées par empilement alterné d'au moins une première tôle essentiellement lisse (2) et d'au moins une seconde tôle (3) ondulée ou infléchie en zigzag,
b) seule la première tôle (2) présente des évidements (8; 9).

12. Corps en nid d'abeilles (1) selon la revendication 11, dans lequel la première tôle (2) et la seconde tôle (3) possèdent chacune une résistance électrique spécifique, et celle de la seconde tôle (3) est nettement supérieure à celle de la première tôle (2).

13. Utilisation d'un corps en nid d'abeilles (1) selon l'une quelconque des revendications précédentes comme corps support pour un catalyseur lors de la réalisation d'un système d'échappement pour un véhicule automobile.
